# EUROPÄISCHE PATENTANMELDUNG

(11) **EP 4 737 074 A1**
(43) Veröffentlichungstag der Anmeldung: **06.05.2026**
(21) Anmeldenummer: 25210650.5
(22) Anmeldetag: 23.10.2025
(51) Int. Cl.: B25J 13/08, B25J 15/00, B25J 15/02, B25J 19/02

(54) **KOMMISSIONIEREINRICHTUNG**

(30) Priorität: 29.10.2024 DE 102024131543
(71) Anmelder: Gottlob Stahl Wäschereimaschinenbau GmbH, 71069 Sindelfingen (DE)
(72) Erfinder: Stahl, Werner, 71069 Sindelfingen (DE)
(74) Vertreter: Hoeger, Stellrecht & Partner Patentanwälte mbB

(57) **Zusammenfassung**

Um das Kommissionieren von definiert gefalteten und/oder gelegten Teilen aus biegeschlaffen Materialien, insbesondere Wäsche, möglichst automatisiert durchzuführen, wird vorgeschlagen, welche eine Steuerung zum Erfassen der Teile, insbesondere einzelne Teile oder gestapelte Teile, und eine Handhabungseinrichtung zum mehrdimensionalen Bewegen eines Greifers vorzusehen, mit welchem, gesteuert durch die Steuerung, in einer Greifstellung die Teile aufgenommen und in einer von der Steuerung erfassten sowie durch Vorgaben der Steuerung ausgewählten definierten Aufnahmeeinheit in einer ebenfalls durch Vorgaben der Steuerung definierten Ablageposition abgelegt werden.

## Beschreibung

Die Erfindung betrifft das Kommissionieren von definiert gefalteten und/oder gelegten Teilen aus biegeschlaffen Materialien, insbesondere Wäsche.

Derartige Teile werden bislang, da sie schwer zu erfassen und wegen der Biegeschlaffheit schwer handhabbar sind, manuell kommissioniert.

Der Erfindung liegt daher die Aufgabe zugrunde, derartige biegeschlaffe Teile möglichst automatisiert zu kommissionieren.

Diese Aufgabe wird daher durch eine Kommissioniereinrichtung gelöst, welche eine Steuerung zum Erfassen der Teile, insbesondere einzelne Teile oder gestapelte Teile, und eine von der Steuerung gesteuerte Handhabungseinrichtung zum mehrdimensionalen Bewegen eines Greifers umfasst, mit welchem, gesteuert durch die Steuerung, in einer Greifstellung die Teile aufgenommen und in einer von der Steuerung erfassten sowie durch Vorgaben der Steuerung ausgewählten definierten Aufnahmeeinheit in einer ebenfalls durch Vorgaben der Steuerung definierten Ablageposition abgelegt werden.

Der Vorteil der erfindungsgemäßen Lösung ist somit darin zu sehen, dass damit keinerlei manuelle Interaktion erforderlich ist, um derartige Teile zu erfassen, aufzunehmen und in einer vordefinierten Aufnahmeeinheit in einer vordefinierten Ablageposition abzulegen.

Dabei ist es bei der erfindungsgemäßen Lösung besonders vorteilhaft, wenn die Kommissioniereinrichtung mit einer Erfassungseinheit zum Erfassen der Teile, insbesondere auf einer Ablage, versehen ist.

Das Erfassen der Teile mittels der Erfassungseinheit betrifft zunächst das Erfassen der Teile hinsichtlich ihrer Lage relativ zur Handhabungseinrichtung, insbesondere auf der Ablage, um diese dann gezielt aufnehmen zu können.

Eine weitere vorteilhafte Lösung sieht vor, dass die Erfassungseinheit Merkmale der Teile zur Bestimmung der Art der Teile erfasst.

Damit besteht die Möglichkeit, die Teile selbst hinsichtlich ihrer Art zu identifizieren und somit zwischen verschiedenen Teilen zu unterscheiden und somit auch verschiedene Teile in einer für dieses jeweilige Teil vordefinierten Aufnahmeeinheit in einer vordefinierten Ablageposition abzulegen.

Damit ist die Kommissioniereinrichtung mit der Steuerung in der Lage, verschiedene unterschiedliche Teile als solche zu erkennen und dann je nach Art des Teils in unterschiedlicher Weise eine für dieses Teil definierte Aufnahmeeinheit und für dieses Teil vordefinierten Ablageposition zu ermitteln.

Hinsichtlich der Erfassungseinheit für die Teile sind die unterschiedlichsten Lösungen denkbar.

Eine vorteilhafte Lösung sieht vor, dass die Erfassungseinheit die Teile mit einer optischen Einrichtung erfasst.

Eine derartige optische Einrichtung kann eine Bilderfassungseinrichtung oder ein optisches Scan-System sein.

Besonders zweckmäßig ist es, wenn die Erfassungseinheit eine Oberflächenstruktur der Teile mit der optischen Einrichtung erfasst und somit aus der Oberflächenstruktur, die eine einfarbige oder eine mehrfarbige oder auch eine verschiedene Rauigkeiten aufweisende Oberflächenstruktur sein kann, eine Möglichkeit zur Identifikation der Teile liefert.

Ferner ist es von Vorteil, wenn die Erfassungseinheit eine Kantenstruktur der Teile mit einer optischen Einrichtung erfasst.

Dabei kann die Kantenstruktur der Teile die Außenkanten der Teile zum Gegenstand haben, es ist aber auch denkbar, dass bei zusammengelegten Teilen über die Oberfläche ebenfalls eine Kantenstruktur der Teile verläuft, die mit der optischen Einrichtung erfasst werden kann.

Darüber hinaus sieht eine vorteilhafte Lösung vor, dass die Erfassungseinheit ein an den Teilen vorgesehenes Identifikationselement erfasst.

In diesem Fall ist vorzugsweise die Erfassungseinheit mit Einheiten zur Erfassung des Identifikationselements an dem Teil versehen.

Ein derartiges Identifikationselement kann beispielsweise ein RFID-Chip sein oder aber auch ein Barcode, wobei für das Erfassen des RFID-Chips ein Chiplesegerät als Erfassungseinheit vorgesehen ist und für die Erfassung eines optischen, insbesondere QR-Codes, ein Scanner oder eine Kamera vorgesehen ist.

Des Weiteren sieht eine vorteilhafte Lösung vor, dass die Erfassungseinheit die Teile hinsichtlich ihres Gewichts erfasst.

Hierzu ist vorzugsweise vorgesehen, dass die Erfassungseinheit ein Wiegeelement umfasst.

Insbesondere ist vorteilhafterweise die Kommissioniereinrichtung nach einem oder mehreren der voranstehenden Merkmale so ausgebildet, dass die Erfassungseinheit mit der Steuerung zusammenwirkt und dass die Steuerung die von der Erfassungseinheit ermittelten Daten mit in dieser abgespeicherten Aufnahmedaten vergleicht und dadurch die Teile hinsichtlich deren Lage und Art erfasst, und zu diesen Teilen dann abgespeicherte Ablagedaten, umfassend eine vorgegebene Aufnahmeeinheit und eine vorgegebene Ablageposition, ermittelt.

Grundsätzlich kann die Erfassungseinheit an jeder Stelle der Kommissioniereinrichtung vorgesehen sein.

Eine vorteilhafte Lösung sieht dabei vor, dass die Erfassungseinheit an dem Greifer angeordnet ist.

Eine andere vorteilhafte Lösung sieht vor, dass die Erfassungseinheit der Position des aufzunehmenden Teils, beispielsweise der Ablage, stationär zugeordnet ist.

Im Übrigen besteht aber auch die Möglichkeit, einzelne Komponenten der Erfassungseinheit der Position des aufzunehmenden Teils zuzuordnen und einzelne Komponenten der Erfassungseinheit dem Greifer zuzuordnen.

Bei der Aufnahmeeinheit handelt es sich beispielsweise um Gitterwagen, in denen die Teile sortiert nach ihrer Art zur späteren Verwendung abtransportiert werden können.

Hinsichtlich der weiteren Ausbildung der Kommissioniereinrichtung ist vorzugsweise vorgesehen, dass diese mit einer Identifikationseinheit für die Aufnahmeeinheit oder die Aufnahmeeinheiten versehen ist.

Damit hat die Kommissioniereinrichtung die Möglichkeit, auch die Aufnahmeeinheit als solche zu erfassen, insbesondere zu erfassen, für welchen Abnehmer oder Nutzer die jeweilige Aufnahmeeinheit vorgesehen ist, um damit eine Zuordnung der Teile für den späteren Abnehmer oder Nutzer vornehmen zu können.

Insbesondere ist dabei vorgesehen, dass die Identifikationseinheit für die Aufnahmeeinheit ein Identifikationselement an der Aufnahmeeinheit erkennt.

Ein derartiges Identifikationselement ist beispielsweise ein optisches Element, welches in diesem Fall durch eine Kamera oder einen Scanner der Identifikationseinheit lesbar ist.

Eine andere vorteilhafte Lösung sieht vor, dass das Identifikationselement ein RFID-Element ist, welches in diesem Fall durch ein hierfür geeignetes Lesegerät lesbar ist.

Darüber hinaus ist vorzugsweise vorgesehen, dass die Kommissioniereinrichtung mit einem Positionserkennungssystem für die Erfassung der Position der jeweiligen Aufnahmeeinheit relativ zur Handhabungseinrichtung versehen ist.

Das Positionserkennungssystem kann dabei beispielsweise Tastsensoren zur Erkennung der Position der Aufnahmeeinheit aufweisen.

Eine besonders vorteilhafte Lösung sieht vor, dass das Positionserkennungssystem für die Aufnahmeeinheit ein optisches Positionserkennungssystem ist. D.h., dass das optische Positionserkennungssystem die Position der Aufnahmeeinheit entweder durch eine Kamera oder durch einen optischen Scanner ermittelt.

Des Weiteren ist zweckmäßigerweise vorgesehen, dass die Kommissioniereinrichtung mit einem Positionserkennungssystem zur Erfassung der Ablageposition des mindestens einen Teils in der Aufnahmeeinheit versehen ist.

Vorzugsweise ist aber auch dieses Positionserkennungssystem zur Erfassung der Ablageposition des mindestens einen Teils ein optisches Positionserkennungssystem.

Besonders vorteilhaft ist es, wenn die Steuerung mit der Identifikationseinheit und dem Positionserkennungssystem für die Aufnahmeeinheit sowie dem Positionserkennungssystem für die Aufnahmeeinheit sowie dem Positionserkennungssystem für die Ablageposition derart zusammenwirkt, dass diese den Greifer zur Ablage der Teile diese entsprechend den zu ermittelten Ablagedaten und Ablagepositionen in den erfassten Aufnahmeeinheiten und Ablagepositionen steuert.

Hinsichtlich der Ausbildung des Greifers wurden im Zusammenhang mit der bisherigen Erläuterung der erfindungsgemäßen Lösung keine näheren Angaben gemacht.

Eine vorteilhafte Lösung sieht vor, dass der Greifer relativ zueinander bewegbare Greifelemente umfasst, die zwischen einer Freigabestellung und einer Greifstellung bewegbar sind, so dass ein einfaches Greifen der Teile erfolgen kann.

Insbesondere ist dabei vorgesehen, dass die Greifelemente beim Greifen der Teile, insbesondere das in vertikaler Richtung in der untersten Position liegende Teil, diese miteinander zugewandten Greifvorsprüngen hintergreifen.

Insbesondere hintergreifen die Greifvorsprünge beim Greifen der Teile das auf der Ablage aufliegende Teil auf seiner der Ablage zugewandten Seite, insbesondere der Unterseite desselben.

Ferner ist bei einer vorteilhaften Lösung vorgesehen, dass die Greifelemente in der Freigabestellung derart angeordnet sind, dass die Greifvorsprünge berührungslos mit den jeweiligen Teilen an deren Außenkontur, insbesondere deren Außenkanten, vorbeibewegbar sind, um die Teile vor dem Greifen nicht zu verschieben oder deren Form zu verändern oder diese zu deformieren.

Dagegen ist vorzugsweise vorgesehen, dass die Greifelemente in einer Greifstellung die Teile an ihren Außenkanten mit Seitenteilen der Greifelemente berühren, so dass dadurch die Teile im Greifer lagestabil gehalten werden können.

Hinsichtlich der Verbindung zwischen den Greifvorsprüngen und den Seitenteilen der Greifelemente wurden bislang keine näheren Angaben gemacht.

Prinzipiell könnten die Greifvorsprünge beweglich an den Seitenteilen angeordnet sein.

Eine besonders einfache Lösung sieht jedoch vor, dass die Greifvorsprünge fest mit den Seitenteilen der Greifelemente verbunden sind.

Besonders vorteilhaft ist es, insbesondere um Stapel von den erfindungsgemäßen Teilen zu greifen, wenn die Greifelemente sich ausgehend von einer Greiferbasis erstreckende Seitenteile aufweisen, die endseitig die Greifvorsprünge tragen.

Ferner ist vorzugsweise vorgesehen, dass die Seitenteile der Greifelemente ausgehend von der Greiferbasis in jeder Stellung der Greifelemente ungefähr parallel zueinander verlaufen, um somit vorteilhaft Stapel von Teilen greifen zu können, ohne die Teile zu deformieren.

Zur Bewegung der Greifelemente in die verschiedenen Stellungen ist vorzugsweise vorgesehen, dass die Greifelemente mittels einer Antriebseinheit, insbesondere jedes der Greifelemente mit einer eigens für diese vorgesehenen Antriebseinheit, zwischen der Freigabestellung und der Greifstellung bewegbar ist, wobei insbesondere die Freigabestellung variabel sein kann, je nach der Art und den Abmessungen der Teile, denn die Freigabestellung muss lediglich immer so bemessen sein, dass die Greifvorsprünge an der Außenkante der Teile vorbeibewegbar sein müssen.

Hinsichtlich der Antriebseinheit ist vorzugsweise vorgesehen, dass diese an der Greiferbasis angeordnet ist.

Ferner ist vorzugsweise vorgesehen, dass der Greifer auf die Teile in vertikaler Richtung zugreift, um diese zu greifen, um aufgrund der biegeschlaffen Ausbildung der Teile eine Verschiebung oder Verformung der Teile zu verhindern, so dass die Teile formerhaltend durch den Greifer bewegbar sind.

Des Weiteren ist vorzugsweise ebenfalls vorgesehen, dass der Greifer die Teile für das Ablegen vorzugsweise ebenfalls in vertikaler Richtung bewegt, um insbesondere die Möglichkeit zu haben, die Teile aufeinander zu stapeln.

Ferner ist noch insbesondere zum Greifen von einzelnen biegeschlaffen Teilen vorgesehen, dass die Greifelemente mit bewegbaren Klemmkörpern versehen sind, welche von einer den Greifvorsprüngen abgewandten Seite in Richtung auf die Greifvorsprünge zu bewegbar sind.

Hinsichtlich des Greifens der Teile mit den Greifvorsprüngen ist insbesondere vorgesehen, dass die Greifvorsprünge so angeordnet sind, dass diese das zu greifende Teil in seinen unteren Außenbereichen untergreifen, um somit durch die Greifvorsprünge eine gewisse Art der seitlichen Auflage für die Teile zu schaffen.

Da jedoch biegeschlaffe Teile die Tendenz haben durchzuhängen und somit wieder von den Greifvorsprüngen abrutschen können, sofern sie nicht insgesamt in einem Stapel stabilisiert sind, ist vorzugsweise vorgesehen, dass die Klemmkörper so angeordnet sind, dass diese in der Lage sind, die Teile in ihren Außenbereichen zwischen den Klemmkörpern und den Greifvorsprüngen einzuklemmen, und zwar vor einem Anheben der Teile durch den Greifer, so dass die Teile hinsichtlich ihrer Flächenausdehnung durch den Greifer stabilisiert und im Greifer fixiert sind.

Hinsichtlich der Bewegbarkeit der Klemmkörper wurden bislang keine näheren Angaben gemacht.

So sieht eine vorteilhafte Lösung vor, dass die Klemmkörper durch Klemmantriebe antreibbar sind.

Diese Klemmantriebe sind vorzugsweise an den Greifelementen angeordnet, um mitsamt den Greifelementen relativ zueinander bewegbar sind, damit die Klemmelemente mit den Klemmantrieben entsprechend der Bewegung der Greifelemente zwischen der Freigabestellung und der Greifstellung bewegbar sind.

Vorzugsweise sind ferner die Klemmkörper an den Greifelementen, insbesondere deren Seitenteile, bewegbar geführt, so dass dadurch die Klemmkörper relativ zu den Greifelementen stabil geführt sind.

Die vorstehende Beschreibung erfindungsgemäßer Lösungen umfasst somit insbesondere die durch die nachfolgend durchnummerierten Ausführungsformen definierten verschiedenen Merkmalskombinationen:
1. Kommissioniereinrichtung (10) für definiert gefaltete und/oder gelegte Teile (22) aus biegeschlaffen Materialien, insbesondere Wäsche, umfassend eine Steuerung (52) zum Erfassen von Teilen (22), insbesondere einzelne Teile (22) oder gestapelte Teile (22), eine von der Steuerung (52) gesteuerte Handhabungseinrichtung (12) zum mehrdimensionalen Bewegen eines Greifers (14), mit welchem in einer Greifstellung Teile (22), aufgenommen und, in einer von der Steuerung (52) erfassten sowie durch Vorgaben der Steuerung (52) ausgewählten Aufnahmeeinheit (34) in einer ebenfalls durch Vorgaben der Steuerung (52) definierten Ablageposition abgelegt werden.
2. Kommissioniereinrichtung nach Ausführungsform 1, wobei die Einrichtung mit einer Erfassungseinheit (40, 40') zum Erfassen der Teile (22), insbesondere auf einer Ablage (24), versehen ist.
3. Kommissioniereinrichtung nach Ausführungsform 1 oder 2, wobei die Erfassungseinheit (40, 40') die Teile (22) hinsichtlich ihrer Lage (x, y) relativ zur Handhabungseinrichtung (12), insbesondere auf der Ablage (24), erfasst.
4. Kommissioniereinrichtung nach einer der Ausführungsformen 1 bis 3, wobei die Erfassungseinheit (40, 40') Merkmale der Teile (22) zur Bestimmung der Art der Teile (22) erfasst.
5. Kommissioniereinrichtung nach Ausführungsform 4, wobei die Erfassungseinheit (40) die Teile (22) mit einer optischen Einrichtung (42) erfasst.
6. Kommissioniereinrichtung nach Ausführungsform 5, wobei die Erfassungseinheit (40, 40') eine Oberflächenstruktur (46) der Teile (22) mit einer Bilderfassungseinrichtung (42) erfasst.
7. Kommissioniereinrichtung nach Ausführungsform 5, wobei die Erfassungseinheit (40, 40') eine Kantenstruktur (48) der Teile (22) mit der optischen Einrichtung (42) erfasst.
8. Kommissioniereinrichtung nach einer der voranstehenden Ausführungsformen, wobei die Erfassungseinheit (40, 40') ein an den Teilen (22) vorgesehenes Identifikationselement (62, 64) erfasst.
9. Kommissioniereinrichtung nach Ausführungsform 8, wobei die Erfassungseinheit (40, 40') mit Einheiten (72, 74) zur Erfassung des Identifikationselements (62, 64) an dem Teil (22) versehen ist.
10. Kommissioniereinrichtung nach einer der voranstehenden Ausführungsformen, wobei die Erfassungseinheit (40, 40') die Teile (22) hinsichtlich ihres Gewichts erfasst.
11. Kommissioniereinrichtung nach Ausführungsform 10, wobei die Erfassungseinheit (40, 40') ein Wiegeelement (76) umfasst.
12. Kommissioniereinrichtung nach einer der Ausführungsformen 2 bis 11, wobei die Erfassungseinheit (40, 40') mit der Steuerung (52) zusammenwirkt und dass die Steuerung (52) die von der Erfassungseinheit (40, 40') ermittelten Daten mit in dieser abgespeicherten Aufnahmedaten vergleicht und dadurch die Teile (22) hinsichtlich deren Lage und Art erfasst, und zu diesen Teilen (22) dann abgespeicherte Ablagedaten, umfassend eine vorgegebene Aufnahmeeinheit (34) und eine vorgegebene Ablageposition, zu ermitteln.
13. Kommissioniereinrichtung nach einer der voranstehenden Ausführungsformen, wobei die Erfassungseinheit (40, 40') an dem Greifer (14) angeordnet ist.
14. Kommissioniereinrichtung nach einer der voranstehenden Ausführungsformen, wobei die Erfassungseinheit (40, 40') der Ablage (24) zugeordnet ist.
15. Kommissioniereinrichtung nach einer der voranstehenden Ausführungsformen, wobei diese mit einer Identifikationseinheit (82, 84) für die Aufnahmeeinheit (32) versehen ist.
16. Kommissioniereinrichtung nach Ausführungsform 14, wobei die Identifikationseinheit (82, 84) für die Aufnahmeeinheit (32) eine Identifikationselement (34) an der Aufnahmeeinheit (32) erkennt.
17. Kommissioniereinrichtung nach Ausführungsform 15, wobei das Identifikationselement (34) der Aufnahmeeinheit (32) ein optisches Element ist.
18. Kommissioniereinrichtung nach Ausführungsform 15, wobei das Identifikationselement (34) ein RFID-Element ist.
19. Kommissioniereinrichtung nach einer der voranstehenden Ausführungsformen, wobei diese mit einem Positionserkennungssystem (80) für die Position der Aufnahmeeinheit (32) relativ zur Handhabungseinrichtung (12) versehen ist.
20. Kommissioniereinrichtung nach Ausführungsform 19, wobei das Positionserkennungssystem (80) für die Aufnahmeeinheit (34) ein optisches Positionserkennungssystem (84) ist.
21. Kommissioniereinrichtung nach einer der voranstehenden Ausführungsformen, wobei mit einem Positionserkennungssystem (84) zur Erfassung der Ablageposition des mindestens einen Teils (22) in der Aufnahmeeinheit (32) versehen ist.
22. Kommissioniereinrichtung nach Ausführungsform 21, wobei das Positionserkennungssystem (84) zur Erfassung der Ablageposition des mindestens einen Teils (22) ein optisches Positionserkennungssystem (84) ist.
23. Kommissioniereinrichtung nach einer der Ausführungsformen 15 bis 22, wobei die Steuerung (52) mit der Identifikationseinheit (80, 82) und dem Positionserkennungssystem (84) für die Aufnahmeeinheit (34) sowie dem Positionserkennungssystem (84) für die Ablageposition derart zusammenwirkt, dass diese den Greifer (14) zur Ablage der Teile (22) entsprechend den zu ermittelten Ablagedaten und Ablagepositionen in den erfassten Aufnahmeeinheiten (32) und Ablagepositionen steuert.
24. Kommissioniereinrichtung nach einer der voranstehenden Ausführungsformen, wobei der Greifer (14) relativ zueinander bewegbare Greifelemente (96) aufweist, die zwischen einer Freigabestellung und einer Greifstellung bewegbar sind.
25. Kommissioniereinrichtung nach Ausführungsform 24, wobei die Greifelemente (96) beim Greifen der Teile (22) diese miteinander zugewandten Greifvorsprüngen (104) hintergreifen.
26. Kommissioniereinrichtung nach Ausführungsform 24 oder 25, wobei die Greifelemente (94) in der Freigabestellung derart angeordnet sind, dass die Greifvorsprünge (104) berührungslos mit den jeweiligen Teilen (22) an deren Außenkontur (112) vorbeibewegbar sind.
27. Kommissioniereinrichtung nach Ausführungsform 24 bis 26, wobei die Greifelemente (96) in einer Greifstellung die Teile (22) an ihren Außenkanten (112) mit Seitenteilen (102) der Greifelemente (96) berühren.
28. Kommissioniereinrichtung nach einer der voranstehenden Ausführungsformen, wobei die Greifvorsprünge (104) der Greifelemente (96) fest mit den Seitenteilen (102) der Greifelemente (96) verbunden sind.
29. Kommissioniereinrichtung nach einer der Ausführungsformen 25 bis 28, wobei die Greifelemente (96) sich ausgehend von einer Greiferbasis (92) erstreckende Seitenteile (102) aufweisen, die endseitig die Greifvorsprünge (104) tragen.
30. Kommissioniereinrichtung nach einer der Ausführungsformen 25 bis 29, wobei die Seitenteile (102) der Greifelemente (96) ausgehend von der Greiferbasis (92) in jeder Stellung der Greifelemente (96) ungefähr parallel zueinander verlaufen.
31. Kommissioniereinrichtung nach einer der Ausführungsformen 25 bis 30, wobei die Greifelemente (96) mittels einer Antriebseinheit (98) zwischen der Freigabestellung und der Greifstellung bewegbar sind.
32. Kommissioniereinrichtung nach Ausführungsform 31, wobei die Antriebseinheit (98) an der Greiferbasis (92) angeordnet ist.
33. Kommissioniereinrichtung nach einer der Ausführungsformen 25 bis 32, wobei der Greifer (14) auf die Teile (22) in vertikaler Richtung (V) zugreift.
34. Kommissioniereinrichtung nach einer der Ausführungsformen 25 bis 33, wobei der Greifer (14) die Teile (22) für das Ablegen in vertikaler Richtung (V) bewegt.
35. Kommissioniereinrichtung nach einer der Ausführungsformen 25 bis 34, wobei die Greifelemente (96) mit bewegbaren Klemmkörper (116) versehen sind, welche von einer den Greifvorsprüngen (104) abgewandten Seite in Richtung auf die Greifvorsprünge (104) zu bewegbar sind.
36. Kommissioniereinrichtung nach einer der Ausführungsformen 25 bis 35, wobei die Greifvorsprünge (104) so angeordnet sind, dass diese das zu greifende Teil (22) in seinen unteren Außenbereichen (108) hintergreifen.
37. Kommissioniereinrichtung nach einer der Ausführungsformen 35 oder 36, wobei die Klemmkörper (116) so angeordnet sind, dass sie in der Lage sind, die Teile (22) in ihren Außenbereichen (124) zwischen den Klemmkörpern (116) und den Greifvorsprüngen (104) einzuklemmen.
38. Kommissioniereinrichtung nach Ausführungsform 37, wobei die Klemmkörper (116) durch Klemmantriebe (118) antreibbar sind.
39. Kommissioniereinrichtung nach Ausführungsform 38, wobei die Klemmantriebe (118) an den Greifelementen (96) angeordnet sind.
40. Kommissioniereinrichtung nach einer der Ausführungsformen 37 bis 39, wobei die Klemmkörper (116) an den Greifelementen (96) bewegbar geführt sind.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine perspektivische Ansicht eines ersten Ausführungsbeispiels einer Kommissioniereinrichtung;
- Fig. 2: ein erstes Ausführungsbeispiel einer Erfassung eines Teils durch eine Erfassungseinheit gemäß der vorliegenden Erfindung;
- Fig. 3: ein zweites Ausführungsbeispiel der Erfassung eines Teils durch eine erfindungsgemäße Erfassungseinheit;
- Fig. 4: eine perspektivische Darstellung eines ersten Ausführungsbeispiels eines Greifers vor dem Greifen eines Teils;
- Fig. 5: eine perspektivische Darstellung des Greifers gemäß Fig. 4 nach dem Greifen eines Teils und Klemmen desselben;
- Fig. 6: eine perspektivische Darstellung einer Aufnahmeeinheit mit auf deren Ablagefläche abgelegten Teilen zum Teil als Stapel zum Teil als Einzelteile bei dem ersten Ausführungsbeispiel der erfindungsgemäßen Kommissioniereinrichtung;

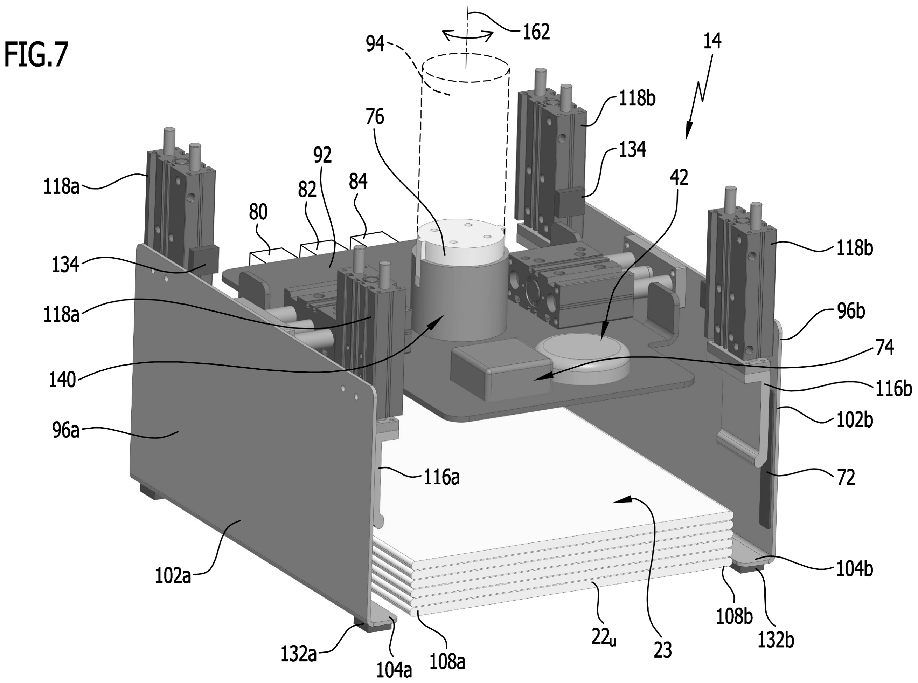

- Fig. 7: eine perspektivische Darstellung des Greifers gemäß Fig. 4 vor dem Greifen eines Stapels von Teilen;

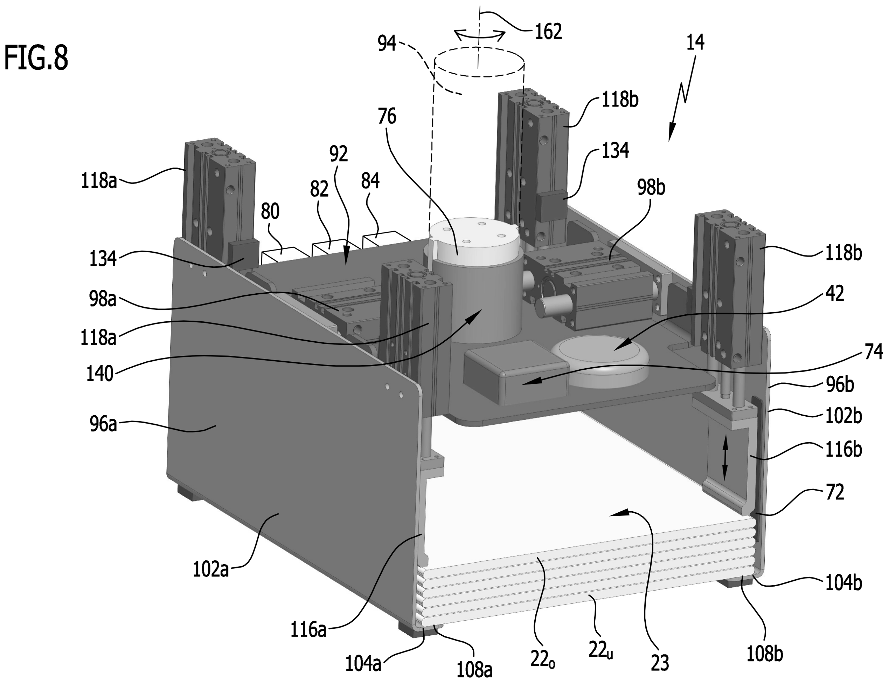

- Fig. 8: eine perspektivische Darstellung des Greifers gemäß Fig. 7 nach dem Greifen des Stapels von Teilen und dem Einklemmen des Stapels zwischen den Klemmelementen und den Greifvorsprüngen;
- Fig. 9: eine Darstellung ähnlich Fig. 6 der Aufnahmeeinheit mit einem auf der Ablagefläche der Aufnahmeeinheit abgelegten Stapel und
- Fig. 10: eine perspektivische Darstellung eines zweiten Ausführungsbeispiels einer erfindungsgemäßen Kommissioniereinrichtung.

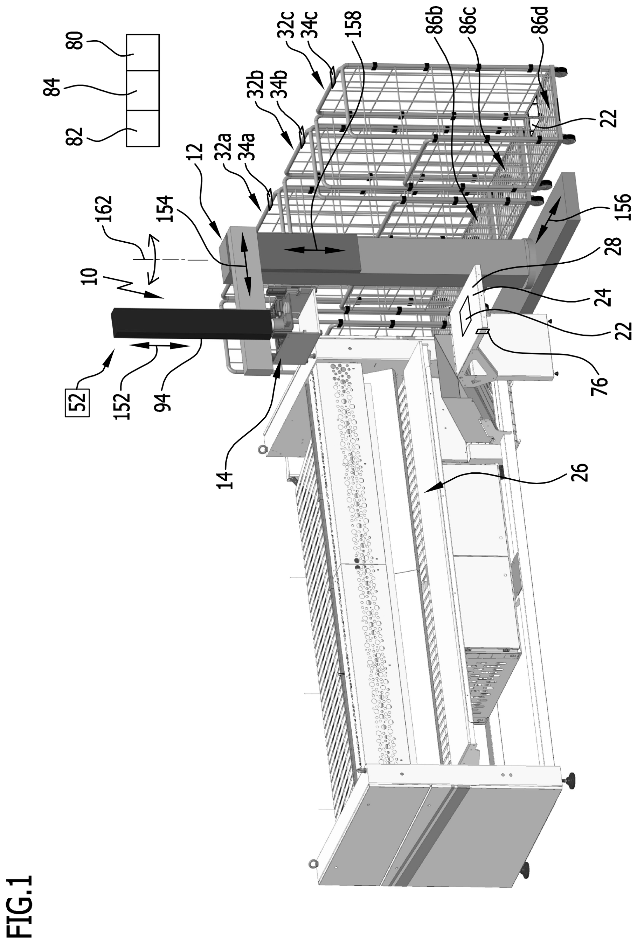

Ein in Fig. 1 dargestelltes erstes Ausführungsbeispiel einer Kommissioniereinrichtung 10 umfasst eine Handhabungseinrichtung 12 zum Bewegen eines als Ganzes mit 14 bezeichneten Greifers, um einzelne oder gestapelte Teile 22, die auf einer Ablage 24, beispielsweise durch eine Wasch- und/oder Legevorrichtung 26 abgelegt werden, zu erfassen und je nach Art der Teile 22 in verschiedenen Aufnahmeeinheiten 32a, 32b, 32c oder 32d, je nach Art der Teile 22, abzulegen.

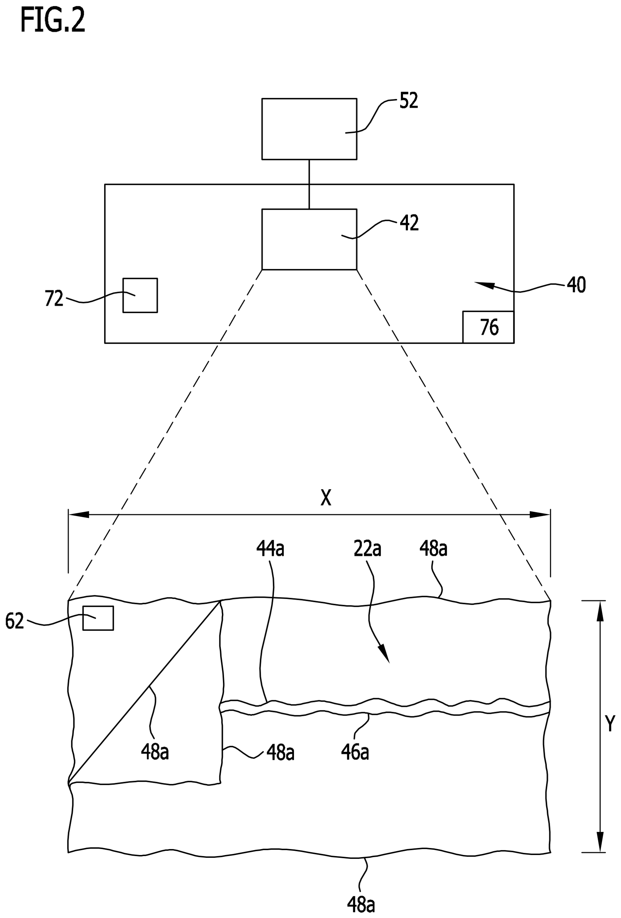

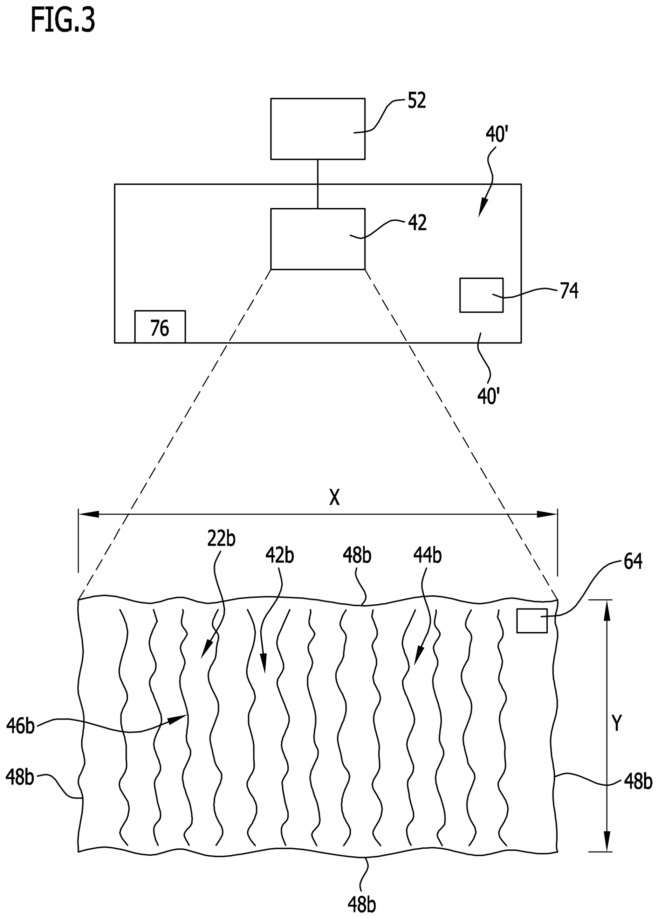

Dabei sind die Teile 22 definiert gefaltete und/oder gelegte Teile aus biegeschlaffen Materialien, beispielsweise Wäsche, bei denen es sich, wie beispielsweise in Fig. 2 dargestellt, um zusammengelegte Handtücher 22a oder, wie in Fig. 3 dargestellt, um Bettwäsche 22b handeln kann.

Zum Erfassen der Teile 22 umfasst eine beispielsweise der Ablage 24 zugeordnete und im Abstand von dieser fest installierte Erfassungseinheit 40 beispielsweise eine Kamera 42, welche im Abstand von einer Oberfläche 44a des jeweiligen Teils 22, beispielsweise eines Teils 22a, angeordnet ist, um das Teil 22a in seiner exakten Position auf der Ablagefläche 28 und seiner gesamten Flächenausdehnung in zwei quer zueinander und parallel zu einer Ablageoberfläche 28 verlaufenden Richtungen X, Y zu erfassen und somit dessen Abmessungen in diesen quer zueinander verlaufenden Richtungen X und Y zu bestimmen (Fig. 2).

Darüber hinaus ist die Kamera 42 auch in der Lage, nicht nur die Ausdehnung der Oberfläche 44a zu erfassen, sondern auch eine Oberflächenstruktur und/oder Farbe 46a und gegebenenfalls auch eine Kantenstruktur 48a zu erfassen, um dadurch auf die Art des Teils 22a schließen zu können.

Auch im Falle beispielsweise des Teils 22b erfolgt mittels der Kamera 42 eine Erfassung der äußeren Abmessungen X und Y in den zwei quer zueinander verlaufenden Richtungen parallel zur Ablage 24 durch Erfassen der Oberfläche 44b, der Oberflächenstruktur 46b und der Kantenstruktur 48b (Fig. 3).

Aufgrund dieser Merkmale wie Ausdehnung der Oberfläche 44 in den zwei quer zueinander und parallel zur Ablageoberfläche 28 der Ablage 24 verlaufenden X/Y-Richtungen der Oberflächenstruktur 46 und der Kantenstruktur 48 ist eine mit der Erfassungseinheit 40 zusammenwirkende Steuerung 52 in der Lage, durch Vergleich mit gespeicherten derartigen Merkmalen wie Oberfläche 44, Oberflächenstruktur 46 und Kantenstruktur 48 von verschiedenen Teilen 22 eine erste Identifikation des jeweiligen Teils 22 vorzunehmen.

Ergänzend hierzu ist es aber auch noch denkbar, dass die Teile 22a oder 22b weitere Identifikationselemente, wie beispielsweise einen RFID-Chip 62 (Fig. 2) oder einen optischen Code 64 (Fig. 3) aufweisen, wobei der RFID-Chip 62 beispielsweise durch ein Chiplesegerät 72 der Erfassungseinheit 40, welches mit der Steuerung 52 verbunden ist, auslesbar ist oder der optische Code 64 beispielsweise durch einen mit der Steuerung 52 verbundenen optischen Scanner 74 der Erfassungseinheit 40' auslesbar ist.

Durch diese Vielzahl von Parametern besteht somit die Möglichkeit, weitere Informationen über die Art der Teile 22a oder 22b zu gewinnen, mit denen die Steuerung 52 aufgrund in dieser abgespeicherten Daten zur Identifikation der Teile 22 in der Lage ist, die Teile 22a oder 22b zu identifizieren.

Darüber hinaus besteht auch noch die Möglichkeit, dass das Gewicht der Teile 22a, 22b erfasst wird, wobei beispielsweise der Ablage 24 ein Wiegeelement 76 der Erfassungseinheit 40, 40' zugeordnet ist, welches das Gewicht der auf der Ablage 24 aufliegenden Teile 22 oder gegebenenfalls auch Teilestapel erfasst und dies der Steuerung 52 übermittelt, wodurch ebenfalls weitere ergänzende Daten zur Identifikation der Teile 22 zur Verfügung stehen.

Somit kann die Steuerung 52 mittels der Erfassungseinheit 40, 40', beispielsweise entweder mit der Kamera 42 und/oder dem Scanner 74, nicht nur die Abmessungen der Oberfläche 44a in den parallel zur Ablageoberfläche 28 verlaufenden Richtungen X und Y erfassen, sondern auch die exakte Position der Teile 22a oder 22b auf der Ablageoberfläche 28, um diese nachfolgend gesteuert durch die Steuerung 52 mit dem Greifer 14 greifen zu können.

Damit ist die Kommissioniereinrichtung 10 mittels der Steuerung 52 in der Lage, die auf der Ablageoberfläche 28 aufliegenden Teile 22 zu identifizieren und deren Lage auf der Ablageoberfläche 28 zur Aufnahme durch den Greifer 14 exakt zu bestimmen.

Im Rahmen der erfindungsgemäßen Lösung ist es jedoch nicht nur notwendig, die Teile 22 auf der Ablage 24, insbesondere der Ablageoberfläche 28, zu erfassen, sondern auch die zur Verfügung stehenden Aufnahmeeinheiten 32a, 32b, 32c und 32d für die Teile 22 als solche zu erfassen, da davon auszugehen ist, dass unterschiedliche Teile 22, beispielsweise Handtücher 22a oder Bettwäsche 22b, in die unterschiedlichen Aufnahmeeinheiten 32a, 32b, 32c und 32d, beispielsweise Gitterwagen zum Abtransport der Teile, oder zumindest in unterschiedlicher Stückzahl und/oder an unterschiedliche Ablagepositionen auf Ablageflächen 86 in die verschiedenen Aufnahmeeinheiten 32a, 32b, 32c und 32d verbracht werden sollen.

Hierzu erfolgt eine Erfassung der verschiedenen Aufnahmeeinheiten 32a, 32b, 32c und 32d die über Identifikationselemente 34a, 34b, 34c und 34d, die stationär an diesen angeordnet sind, so dass diese einzeln, insbesondere im Hinblick auf ihren späteren Einsatz, identifizierbar sind.

Handelt es sich bei den Identifikationselementen 34a, 34b, 34c und 34d um RFID-Chips so sind diese durch eine als RFID-Lesegerät ausgebildete Identifikationseinheit 80 identifizierbar, handelt es sich bei den Identifikationselementen 34a, 34b, 34c und 34d um einen optischen Code, beispielsweise einen QR-Code, so sind diese Identifikationselemente durch eine als Kamera oder als optischer Scanner ausgebildete Identifikationseinheit 82 identifizierbar.

Desgleichen besteht zum Deponieren der Teile in den Aufnahmeeinheiten 32a, 32b, 32c und 32d die Notwendigkeit, deren Position insbesondere auch die Lagen der Ablageflächen 86a bis 86d exakt mit einem Positionserkennungssystem 84 zu erfassen.

Als Positionserkennungssystem 84 sind beispielsweise auch eine Kamera und/oder ein Scanner vorgesehen, der nicht nur Außenabmessungen der Aufnahmeeinheiten 32a bis 32d erfassen, sondern auch die in diesen vorhandenen Ablageflächen 86a, 86b, 86c und 86d für die abzulegenden Teile 22 sowie auch die Positionen von auf den Ablageflächen 86a, 86b, 86c und 86d abgelegten Teile 22.

Es ist aber auch möglich die Identifikationseinheit 82 als Positionserkennungssystem 84 einzusetzen, wie in Fig. 1 dargestellt.

Gemäß Fig. 1 können die Identifikationseinheiten 80, 82 und das Positionserkennungssystem 84 stationär angeordnet sein.

Alles in allem ist somit die Steuerung 52 in der Lage, die Teile 22 auf der Ablageoberfläche 28 zu erfassen und zu identifizieren, gegebenenfalls mit Hilfe des Chiplesegerätes 72 und/oder des Scanners 74 und/oder des Wiegeelements 76 zu identifizieren, außerdem die Aufnahmeeinheiten 32a bis 32d mit den mit den Identifikationseinheiten 80, 82 zu identifizieren mit dem Positionserkennungssystem 84 umfassend die Kamera und/oder den Scanner, die Positionen der Aufnahmeeinheiten 32a, 32b, 32c und 32d und der von diesen bereitgestellten Ablageflächen 86a, 86b, 86c und 86d zu erfassen.

Aufgrund all dieser Parameter ist die Steuerungseinheit 52 somit in der Lage, auf der Ablagefläche 28 aufliegende Teile 22 mittels des Greifers 14 in ihrer Ausgangsposition auf der Ablageoberfläche 28 zu greifen, anzuheben und, abhängig von der Art der Teile 22, entsprechend der Steuerung 52 übermittelten, insbesondere in der Steuerung 52 gespeicherten, Vorgaben betreffend die Übergabe bestimmter identifizierter Teile 22 in bestimmte, hinsichtlich ihres späteren Einsatzes oder ihrer späteren Verwendung spezifizierten Aufnahmeeinheiten 32a bis 32d auf deren Ablageflächen 86a bis 86c in ebenfalls der Steuerung 52 vorgegebenen Ablagepositionen die Teile 22 dann in den Aufnahmeeinheiten 32a, 32b, 32c, 32d definiert auf einer der von diesen bereitgestellten Ablageflächen 86 in einer definierten Ablageposition abzulegen.

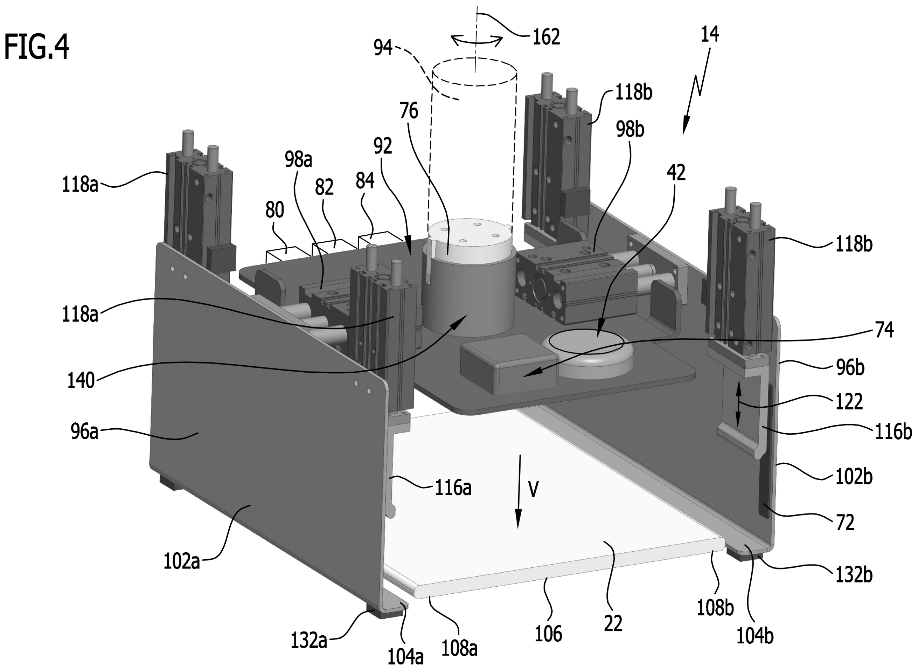

Ein Ausführungsbeispiel eines derartigen Greifers 14 ist in Fig. 4 dargestellt.

Ein derartiger hinsichtlich aller Funktionen von der Steuerung 52 gesteuerter Greifer 14 umfasst eine als Ganzes mit 92 bezeichnete Greiferbasis, welche mit einem Trägerarm 94 der Handhabungseinrichtung 12 verbunden ist.

An der Greiferbasis 92 sind auf einander gegenüberliegenden Seiten derselben Greifelemente 96a, 96b vorgesehen, welche relativ zur Greiferbasis 92 und somit auch relativ zueinander bewegbar sind.

Hierzu sind beispielsweise auf der Greiferbasis 92 von der Steuerung 52 gesteuerte Antriebseinheiten 98a, 98b vorgesehen, welche die Greifelemente 96a, 96b voneinander weg oder aufeinander zu bewegen, wobei die Antriebseinheiten 98a, 98b durch die Steuerung 52 unter Verwendung der dieser zur Verfügung stehenden und von der Erfassungseinheit 40 erfassten Informationen steuerbar sind.

Vorzugsweise sind die Greifelemente 96a, 96b so ausgebildet, dass sie parallel zueinander verlaufende Seitenteile 102a, 102b aufweisen, die stets parallel zueinander ausgerichtet verbleiben, unabhängig ob die Greifelemente 96a, 96b durch die Antriebseinheiten 98a, 98b voneinander weg oder aufeinander zu bewegt werden.

Die Seitenteile 102a, 102b sind ferner an ihren freien, den Antriebseinheiten 98a, 98b abgewandten Enden mit Greifvorsprüngen 104a, 104b versehen, mit welchen die Greifelemente 96a, 96b in der Lage sind, ein zu greifendes Teil 22 auf seiner der Ablageoberfläche 28 zugewandten Unterseite 106 in jeweils einander abgewandten unteren Außenbereichen 108a, 108b zu hintergreifen, so dass die unteren Außenbereiche 108a, 108b dabei auf den Greifvorsprüngen 104a, 104b aufliegen.

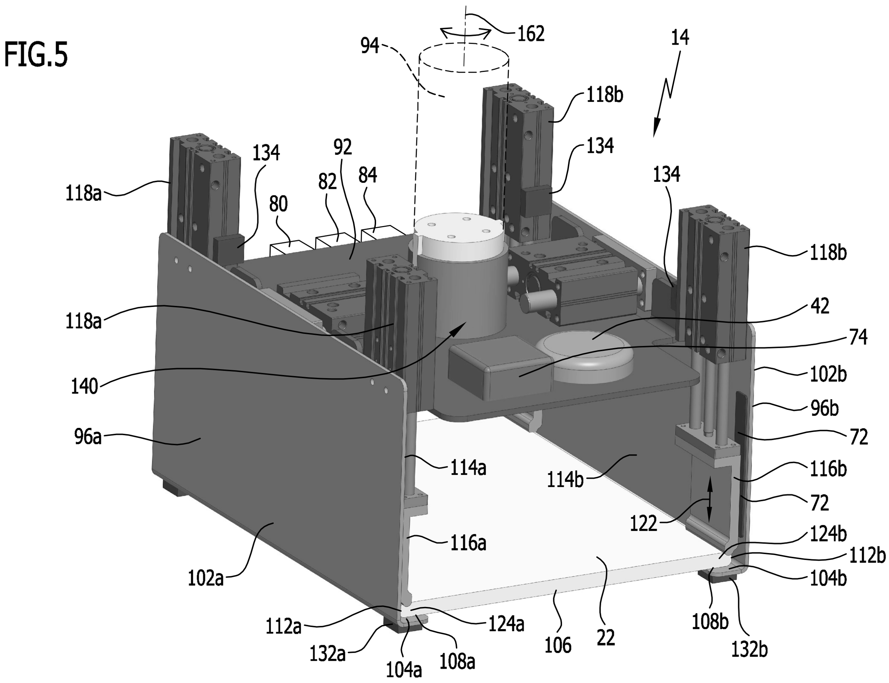

Hierzu werden die Greifelemente 96a, 96b durch die Antriebseinheiten 98a, 98b vor dem Zugreifen auf das Teil 22 soweit auseinander bewegt, dass diese in einer Freigabestellung außerhalb der Ausdehnung des Teils 22 liegen, so dass der Greifer 14 vorzugsweise in vertikaler Richtung V auf das Teil 22 zu bewegt werden kann, ohne dass die Greifvorsprünge 104a, 104b das Teil 22 tangieren und erst dann, wenn die Greifvorsprünge 104a, 104b im Wesentlichen auf der Ablageoberfläche 28 aufliegen, werden die Greifelemente 96a, 96b aufeinander zu in die Greifstellung bewegt, und zwar vorzugsweise lediglich so weit, dass die Greifvorsprünge 104a, 104b das Teil 22 in den Außenbereichen 108a, 108b auf seiner Unterseite 106 untergreifen, wobei die Bewegung der Greifelemente 96a, 96b in die Greifstellung lediglich soweit erfolgt, dass das Teil 22, welches ein biegeschlaffes Teil ist, nicht in seiner Ausdehnung auf der Ablageoberfläche 28 zusammengeschoben wird, sondern lediglich soweit, dass die Greifelemente 96a, 96b Außenkanten 112a, 112b der Seitenteile 102a, 102b berühren, wie dies in Fig. 5 dargestellt ist, so dass das Teil 22 ohne Formveränderung durch den Greifer 14 aufgenommen werden kann.

Da ein einzelnes Teil 22 jedoch biegeschlaff ist, kann dieses aufgrund der in der Regel mangelnden Eigensteifigkeit nicht durch die Greifvorsprünge 104a, 104b des Greifers 14 angehoben werden.

Aus diesem Grund umfasst der Greifer 14 an Innenseiten 114a, 114b der Seitenteile 102a, 102b der Greifelemente 96a, 96b angeordnete Klemmkörper 116a, 116b, welche durch von der Steuerung 52 gesteuerte Klemmantriebe 118a, 118b in Richtung der Greifvorsprünge 104a, 104b und von diesen weg bewegbar sind.

Im einfachsten Fall erfolgt eine Bewegung der Klemmkörper 116a, 116b in einer linearen Richtung 122, es ist aber auch denkbar, die Klemmkörper 116a, 116b mittels der Klemmantriebe 118a, 118b in Richtung der Greifvorsprünge 104a, 104b schwenkend um eine Achse zu bewegen oder von diesen wegzubewegen.

In jedem Fall besteht die Möglichkeit, mittels der Klemmkörper 116a, 116b das Teil 22 in den sich jeweils an die Außenkanten 112a, 112b anschließenden Außenbereichen 124a, 124b zwischen den Klemmkörpern 116a, 116b und den Greifvorsprüngen 104a, 104b zu klemmen und somit zu verhindern, dass das Teil 22 beim Anheben des Greifers 14 aufgrund seiner Biegeschlaffheit aus diesem herausfällt.

Beispielsweise besteht die Möglichkeit, an jedem der Seitenteile 102a, 102b im Bereich von deren beidseitigen, zum Beispiel in vertikaler Richtung verlaufenden, Seitenbereichen derartige Klemmkörper 116a, 116b mit den entsprechenden Klemmantrieben 118a, 118b anzuordnen, wie in Fig. 4 und 5 dargestellt.

Um den Greifer 14 mittels der Steuerung 52 definiert auf der Ablageoberfläche 28 aufsetzen zu können, um das Teil 22 an dessen Außenbereichen 108a, 108b hintergreifen zu können, sind die Greifelemente 96a, 96b an ihren der Basis 92 abgewandten und auf der Ablageoberfläche 28 aufzusetzenden Unterseiten mit Sensoren 132a, 132b versehen, die mit der Steuerung 52 verbunden sind und es erlauben, dass die Steuerung 52 exakt das Annähern und gegebenenfalls das Aufsitzen der Greifelemente 96a, 96b auf der Ablageoberfläche 28 erkennt.

Vorzugsweise sind die Sensoren 132a und 132b dabei an den Seitenteilen 102a, 102b und auch der Greiferbasis 92 abgewandten Unterseite der Greifvorsprünge 104a, 104b angeordnet.

Darüber hinaus ist der Greifer 14 aber auch mit der Steuerung 52 verbundenen Beladesensoren 134 versehen, die beispielsweise im Bereich der Greiferbasis 92 angeordnet sind und es erlauben, die Dicke der Teile 22 oder die Höhe eines Stapels aus Teilen 22 im Greifer 14 zu erfassen und somit zu erkennen, ob die Außenbereiche 124a, 124b des jeweiligen Teils 22 auf den Greifvorsprüngen 104a, 104b aufliegen oder nicht und gegebenenfalls mangels Klemmung mittels der Klemmkörper 116a, 116b wieder aus dem Greifer 14 aufgrund ihres biegeschlaffen Verhaltens herausgerutscht sind.

Bei dem Greifer 14, dargestellt in Fig. 4 und 5, besteht auch die Möglichkeit, die Kamera 42 und den Scanner 74 der Erfassungseinheit 40 an der Basis 92 anzuordnen, und zwar so, dass diese zwischen den Greifelementen 96a, 96b hindurch in der Lage sind, das jeweils zu greifende Teil 22 zu erfassen.

Des Weiteren besteht auch die Möglichkeit, beispielsweise im Bereich der Innenseiten 114a, 114b der Seitenteile 102a, 102b das Chiplesegerät 72 der Erfassungseinheit 40 anzuordnen.

Schließlich besteht auch noch die Möglichkeit, das Wiegeelement 76 der Erfassungseinheit 40 zwischen dem Trägerarm 94 der Handhabungseinrichtung 12 und der Basis 92 anzuordnen, so dass auch das Erfassen des Gewichts eines der Teile 22 oder eines Stapels der Teile 22 im Bereich des Greifers 14 erfolgen kann.

Ergänzend und zu dem Wiegeelement 76, ist zwischen dem Trägerarm 94 und der Greiferbasis 92 noch eine mit der Steuerung 52 verbundene Sensoreinheit 140 zum Erfassen von Kollisionen des Greifers 14 vorgesehen.

Schließlich besteht auch noch die Möglichkeit, an der Greiferbasis 92 des Greifers 14 die Kamera und den Scanner der Positionserkennungseinheit 84 sowie die Identifikationseinheit 80 oder 82 zum Erfassen der Aufnahmeeinheiten 32a, 32b, 32c und 32s anzuordnen.

Damit besteht die Möglichkeit, gesteuert durch die Steuerung 52, durch Bewegen des Greifers 14 mittels der Handhabungseinrichtung 12 beispielsweise in Richtung der Linearachsen 152, 154 und 156 die jeweils in drei unterschiedlichen Raumrichtungen verlaufen, sowie gegebenenfalls der parallel zur Achse 152 verlaufenden Raumrichtung 158, und einer Drehbewegung um eine Drehachse 162, Teile 22 von der Ablageoberfläche 28 der Ablage 24 aufzunehmen, zu identifizieren und gemäß den der Steuerung 52 vorgegebenen Daten für die spätere Verwendung der Teile 22 in einer der Aufnahmeeinheiten 32a, 32b, 32c oder 32d auf einer der Ablageflächen 86a oder 86b oder 86c oder 86d in definierter Ausrichtung und definierter Position, jeweils vollständig gesteuert durch die Steuerung 52, abzulegen, wie in Fig. 1 dargestellt.

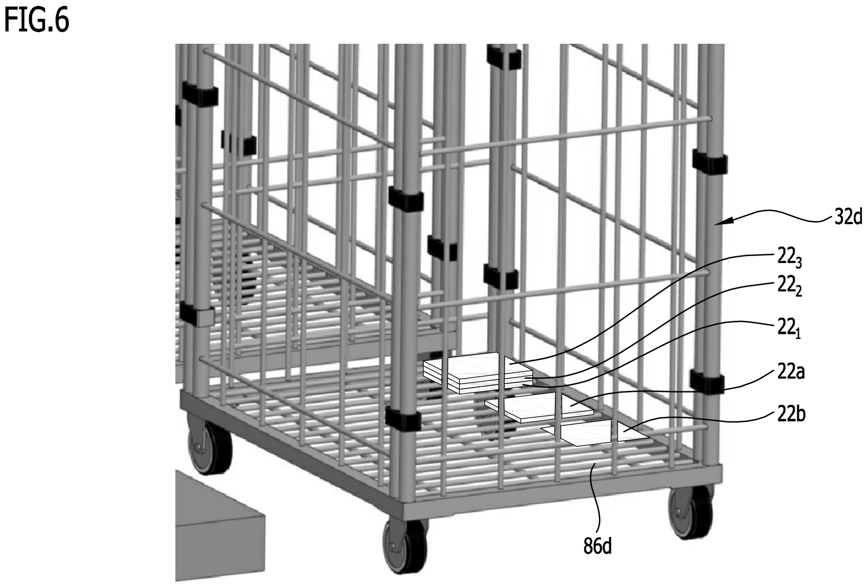

Insbesondere besteht auch, wie in Fig. 6 dargestellt, die Möglichkeit, mehrere der Teile 22, beispielsweise die Teile 22₁, 22₂ und 22₃ übereinanderzustapeln.

Hierzu fährt der Greifer 14 nach Ablegen des ersten Teils 22₁ auf der Ablagefläche 86d wiederum zur Ablage 24 und holt auf der Ablageoberfläche 28 das nächste Teil 22₂, wobei der Greifer 14 dann in vertikaler Richtung V sich deckungsgleich mit dem ersten Teil 22₁ mit dem zweiten Teil 22₂ in Richtung des ersten Teils 22₁ absenkt und durch die Sensoren 132a, 132b erkennen kann, dass der Greifer 14 das erste Teil 22₁ berührt oder kurz vor Berührung des ersten Teils 22₁ steht und dann die Greifelemente 96a, 96b öffnet und in die Freigabestellung bewegt, und somit das Teil 22₂ auf dem ersten Teil 22₁ ablegt.

In gleicher Weise wird mit weiteren Teilen, beispielsweise dem Teil 22₃ oder noch mehr derartigen Teilen 22 verfahren, um auf der Ablagefläche 86c einen Stapel der Teile 22 zu bilden.

Da mit der Kamera und/oder dem Scanner des Positionserkennungssystems 84 die gesamte Ablagefläche 86 erfasst wird, besteht auch die Möglichkeit, mehrere Arten von Teilen 22, beispielsweise die unterschiedlichen und als solche von der Steuerung 52 erkannten Teile 22a und Teile 22b auf der Ablagefläche 86c getrennt voneinander abzulegen und gegebenenfalls, wie im Zusammenhang mit den Teilen 22 erläutert, zu stapeln, wie in Fig. 6 dargestellt.

Das in den Fig. 4 und 5 dargestellte Ausführungsbeispiel des Greifers 14 bietet aber auch die Möglichkeit, auf der Ablageoberfläche 28 der Ablage 24 bereitgestellte, beispielsweise zu einem Stapel 23 gestapelte Teile 22 mit den Greifvorsprüngen 104a und 104b zu greifen und zwar in den Außenbereichen 108a und 108b des untersten Teils 22ᵤ, die somit auf den Greifvorsprüngen 104a und 104b aufliegen.

Je nachdem, ob der Stapel 23 der Teile 22 in sich stabil genug ist, oder nicht, ist es erforderlich, mit den Klemmkörpern 116a, 116b den Stapel 23 durch Beaufschlagen des obersten Teils 22_{O} zwischen den Klemmkörpern 116a, 116b nicht einzuklemmen oder bei Instabilität einzuklemmen, so dass bei Instabilität der Stapel 23 zwischen den Klemmkörpern 116a, 116b und den Greifvorsprüngen 104a, 104b eingeklemmt werden kann.

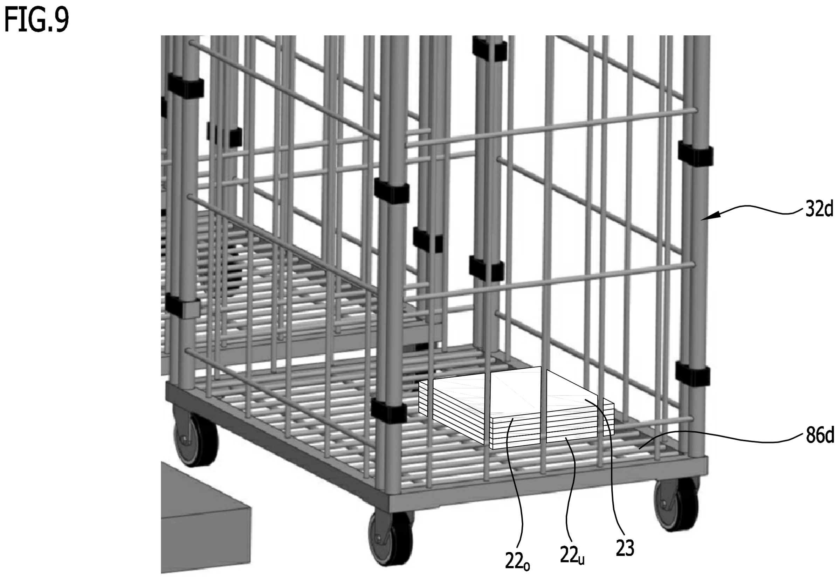

Somit kann mit einem derartigen Greifer 14 der Stapel 23 in Gänze von der Ablageoberfläche 28 der Ablage 24 aufgenommen und, wie in Fig. 9 dargestellt, als Ganzes auf einer der Ablageflächen 86, beispielsweise der Ablagefläche 86d, in definierter Ausrichtung abgelegt werden.

Bei dem Transport eines ganzen Stapels 23 ist es von Vorteil, dass die Seitenteile 102a und 102b der Greifelemente 96a, 96b parallel zueinander verlaufen, da dadurch eine Stabilisierung der Teile 22 in einfacher Weise erfolgt.

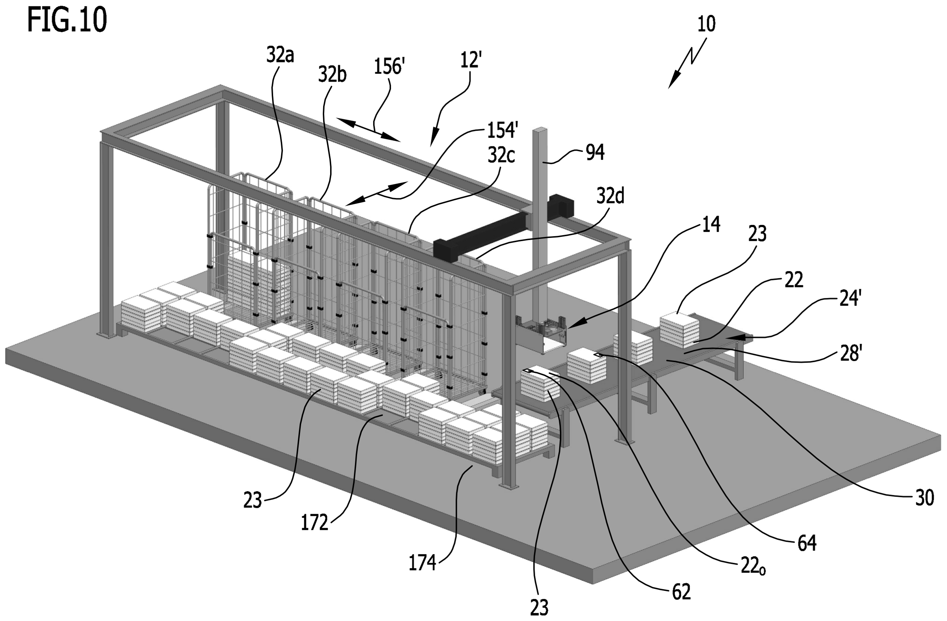

Bei einem zweiten Ausführungsbeispiel einer erfindungsgemäßen Kommissioniereinrichtung 10, dargestellt in Fig. 10 ist die Ablage 24' so ausgebildet, dass auf deren Ablageoberfläche 28', beispielsweise durch ein Transportband 30, Stapel 23 von Teilen 22 in den Bereich des Greifers transportiert werden, wobei die Handhabungseinrichtung 12' als Portal ausgebildet ist und somit einen größeren Handhabungsbereich für den Greifer 14 zur Verfügung stellt, der ebenfalls an einem vertikal bewegbaren Trägerarm 94 angeordnet ist, und in zwei sich in einer horizontal verlaufenden geometrischen Ebene senkrecht zum vertikalen Trägerarm 94 verlaufenden Richtungen 154' und 156' bewegbar ist.

In diesem Fall erfolgt mittels der Steuerung 52, insbesondere mittels des Greifers 14, ein Identifizieren der Teile 22 der Stapel 23 durch Erfassen des jeweils obersten Teils 22_{O} mit der Erfassungseinheit 40 hinsichtlich dessen Oberfläche 44, der Ausdehnung in den X/Y-Richtungen, der Oberflächenstruktur 46 und der Kantenstruktur 48 mittels der Kamera 42 und gegebenenfalls von in den Teilen 22 vorhandenen Identifikationselementen in Form von RIFD-Chips 62 und/oder einem optischen Code 64 in der bereits beschriebenen Art und Weise mittels des Chiplesers 72 und/oder des Scanners 74 sowie durch Erfassen des Gewichts des Stapels 23 mittels des Wiegeelements 76, das beispielsweise ebenfalls im Greifer 14 integriert ist.

Dabei lässt sich insbesondere mittels des Wiegeelements 76 im Greifer 14 das Gewicht des Stapels 23 erfassen, und somit erkennen, wieviele Teile 22 der Stapel 23 umfasst.

Dadurch ist die Steuerung 52 mittels des Greifers 14 aufgrund der Möglichkeit der Erkennung der jeweiligen Teile 22_{O} in dem Stapel 23 in der Lage, mittels der Steuerung 52 die einzelnen Stapel 23 in eine Bereitstellungsposition auf einer Bereitstellungsfläche 172 einer Bereitstellungsaufnahme 174 abzulegen bevor ein Verbringen in die einzelnen Aufnahmeeinheiten 32a bis 32c erfolgt.

Die Aufnahmeeinheiten 32a bis 32d sind in gleicher Weise wie voranstehend beschrieben durch die Kamera 82 und/oder den Scanner 84 identifizierbar und hinsichtlich ihrer räumlichen Größe und der Größe der Ablagefläche 66 mittels der Kamera 82 und/oder dem Scanner 84 ebenfalls ausmessbar, so dass die Steuerung 52 in der Lage ist, dann, wenn die Aufnahmeeinheiten 32a bis 32d zur Verfügung stehen, die Stapel 23 von der Bereitstellungsfläche 172 wiederum aufzunehmen und in den Aufnahmeeinheiten 32a bis 32d in definierten Ablagepositionen auf den jeweiligen Ablageflächen 86 abzulegen.

Dabei besteht ebenfalls die Möglichkeit, mittels des Greifers 14 mehrere der Stapel 23 von gleichen Teilen 22 in den Aufnahmeeinheiten 32a bis 32d übereinander zu stapeln, da der Greifer 14 in der Lage ist, zum einen mittels der Kamera 82 und/oder des Scanners 84 einen bereits in einer der Aufnahmeeinheiten 32a bis 32d abgelegten Stapel 23 durch Erfassen des obersten Teils 22_{O} zu identifizieren und hinsichtlich seiner räumlichen Ausrichtung zu erkennen und den nächsten Stapel 23 mit gleichen Teilen 22 in derselben Ausrichtung auf diesen bereits vorhandenen Stapel 23 aufzusetzen.

Es ist aber auch möglich, mit dem Greifer 14 einen Stapel 23 von Teilen 22 aufzuteilen, nämlich dadurch, dass der Greifer 14 in der Freigabestellung der Greifelemente 96 in vertikaler Richtung auf dem Stapel 23 abgesenkt wird und mittels der Beladesensoren 134 erkannt wird, dass ein Teil des Stapels 23 von Teilen oberhalb der Greifvorsprünge 104 liegt, und dann wird durch Überführung der Greifelemente 96 in die Greifstellung dieser Teil des Stapels 23 durch die Greifvorsprünge 104 erfasst.

Im Fall der Teilung eines Stapels 23 von Teilen 22 lässt sich mittels des Wiegeelements 76 im Greifer 14 ermitteln, wieviele Teile 22 des Stapels 23 gegriffen wurden und, wenn der Stapel 23 vorher vom Greifer erfasst wurde, wieviele Teile 22 noch in dem Stapel 23 verblieben sind.

Im Übrigen sind bei dem zweiten Ausführungsbeispiel diejenigen Teile, die mit dem ersten Ausführungsbeispiel identisch sind, mit denselben Bezugszeichen versehen, so dass vollinhaltlich auf das erste Ausführungsbeispiel Bezug genommen werden kann.

## Patentansprüche

1. Kommissioniereinrichtung (10) für definiert gefaltete und/oder gelegte Teile (22) aus biegeschlaffen Materialien, insbesondere Wäsche, umfassend eine Steuerung (52) zum Erfassen von Teilen (22), insbesondere einzelne Teile (22) oder gestapelte Teile (22), eine von der Steuerung (52) gesteuerte Handhabungseinrichtung (12) zum mehrdimensionalen Bewegen eines Greifers (14), mit welchem in einer Greifstellung Teile (22), aufgenommen und, in einer von der Steuerung (52) erfassten sowie durch Vorgaben der Steuerung (52) ausgewählten Aufnahmeeinheit (34) in einer ebenfalls durch Vorgaben der Steuerung (52) definierten Ablageposition abgelegt werden.

2. Kommissioniereinrichtung nach Anspruch 1, **dadurch gekennzeichnet, dass** die Einrichtung mit einer Erfassungseinheit (40, 40')zum Erfassen der Teile (22), insbesondere auf einer Ablage (24), versehen ist, insbesondere dass die Erfassungseinheit (40, 40') die Teile (22) hinsichtlich ihrer Lage (x, y) relativ zur Handhabungseinrichtung (12), insbesondere auf der Ablage (24), erfasst.

3. Kommissioniereinrichtung nach einem der Ansprüche 1 oder 2, **dadurch gekennzeichnet, dass** die Erfassungseinheit (40, 40') Merkmale der Teile (22) zur Bestimmung der Art der Teile (22) erfasst, insbesondere dass die Erfassungseinheit (40) die Teile (22) mit einer optischen Einrichtung (42) erfasst, insbesondere dass die Erfassungseinheit (40, 40') eine Oberflächenstruktur (46) der Teile (22) mit einer Bilderfassungseinrichtung (42) erfasst und/oder, dass insbesondere die Erfassungseinheit (40, 40') eine Kantenstruktur (48) der Teile (22) mit der optischen Einrichtung (42) erfasst.

4. Kommissioniereinrichtung nach einem der voranstehenden Ansprüche, **dadurch gekennzeichnet, dass** die Erfassungseinheit (40, 40') ein an den Teilen (22) vorgesehenes Identifikationselement (62, 64) erfasst, insbesondere dass die Erfassungseinheit (40, 40') mit Einheiten (72, 74) zur Erfassung des Identifikationselements (62, 64) an dem Teil (22) versehen ist.

5. Kommissioniereinrichtung nach einem der voranstehenden Ansprüche, **dadurch gekennzeichnet, dass** die Erfassungseinheit (40, 40') die Teile (22) hinsichtlich ihres Gewichts erfasst, insbesondere dass die Erfassungseinheit (40, 40') ein Wiegeelement (76) umfasst.

6. Kommissioniereinrichtung nach einem der Ansprüche 2 bis 5, **dadurch gekennzeichnet, dass** die Erfassungseinheit (40, 40') mit der Steuerung (52) zusammenwirkt und dass die Steuerung (52) die von der Erfassungseinheit (40, 40') ermittelten Daten mit in dieser abgespeicherten Aufnahmedaten vergleicht und dadurch die Teile (22) hinsichtlich deren Lage und Art erfasst, und zu diesen Teilen (22) dann abgespeicherte Ablagedaten, umfassend eine vorgegebene Aufnahmeeinheit (34) und eine vorgegebene Ablageposition, zu ermittelt.

7. Kommissioniereinrichtung nach einem der voranstehenden Ansprüche, **dadurch gekennzeichnet, dass** die Erfassungseinheit (40, 40') an dem Greifer (14) angeordnet ist.

8. Kommissioniereinrichtung nach einem der voranstehenden Ansprüche, **dadurch gekennzeichnet, dass** die Erfassungseinheit (40, 40') der Ablage (24) zugeordnet ist.

9. Kommissioniereinrichtung nach einem der voranstehenden Ansprüche, **dadurch gekennzeichnet, dass** diese mit einer Identifikationseinheit (82, 84) für die Aufnahmeeinheit (32) versehen ist, insbesondere dass die Identifikationseinheit (82, 84) für die Aufnahmeeinheit (32) ein Identifikationselement (34) an der Aufnahmeeinheit (32) erkennt und/oder, dass insbesondere das Identifikationselement (34) der Aufnahmeeinheit (32) ein optisches Element ist und/oder, dass insbesondere das Identifikationselement (34) ein RFID-Element ist.

10. Kommissioniereinrichtung nach einem der voranstehenden Ansprüche, **dadurch gekennzeichnet, dass** diese mit einem Positionserkennungssystem (80) für die Position der Aufnahmeeinheit (32) relativ zur Handhabungseinrichtung (12) versehen ist, insbesondere dass das Positionserkennungssystem (80) für die Aufnahmeeinheit (34) ein optisches Positionserkennungssystem (84) ist.

11. Kommissioniereinrichtung nach einem der voranstehenden Ansprüche, **dadurch gekennzeichnet, dass** diese mit einem Positionserkennungssystem (84) zur Erfassung der Ablageposition des mindestens einen Teils (22) in der Aufnahmeeinheit (32) versehen ist, insbesondere dass das Positionserkennungssystem (84) zur Erfassung der Ablageposition des mindestens einen Teils (22) ein optisches Positionserkennungssystem (84) ist.

12. Kommissioniereinrichtung nach einem der Ansprüche 9 bis 11, **dadurch gekennzeichnet, dass** die Steuerung (52) mit der Identifikationseinheit (80, 82) und dem Positionserkennungssystem (84) für die Aufnahmeeinheit (34) sowie dem Positionserkennungssystem (84) für die Ablageposition derart zusammenwirkt, dass diese den Greifer (14) zur Ablage der Teile (22) entsprechend den zu ermittelten Ablagedaten und Ablagepositionen in den erfassten Aufnahmeeinheiten (32) und Ablagepositionen steuert.

13. Kommissioniereinrichtung nach einem der voranstehenden Ansprüche, **dadurch gekennzeichnet, dass** der Greifer (14) relativ zueinander bewegbare Greifelemente (96) aufweist, die zwischen einer Freigabestellung und einer Greifstellung bewegbar sind, insbesondere dass die Greifelemente (96) beim Greifen der Teile (22) diese mit einander zugewandten Greifvorsprüngen (104) hintergreifen und/oder, dass insbesondere die Greifelemente (94) in der Freigabestellung derart angeordnet sind, dass die Greifvorsprünge (104) berührungslos mit den jeweiligen Teilen (22) an deren Außenkontur (112) vorbeibewegbar sind und/oder, dass insbesondere die Greifelemente (96) in einer Greifstellung die Teile (22) an ihren Außenkanten (112) mit Seitenteilen (102) der Greifelemente (96) berühren.

14. Kommissioniereinrichtung nach einem der voranstehenden Ansprüche, **dadurch gekennzeichnet, dass** die Greifvorsprünge (104) der Greifelemente (96) fest mit den Seitenteilen (102) der Greifelemente (96) verbunden sind.

15. Kommissioniereinrichtung nach einem der Ansprüche 10 bis 14, **dadurch gekennzeichnet, dass** die Greifelemente (96) sich ausgehend von einer Greiferbasis (92) erstreckende Seitenteile (102) aufweisen, die endseitig die Greifvorsprünge (104) tragen und/oder, dass insbesondere die Seitenteile (102) der Greifelemente (96) ausgehend von der Greiferbasis (92) in jeder Stellung der Greifelemente (96) ungefähr parallel zueinander verlaufen und/oder, dass insbesondere die Greifelemente (96) mittels einer Antriebseinheit (98) zwischen der Freigabestellung und der Greifstellung bewegbar sind, insbesondere dass die Antriebseinheit (98) an der Greiferbasis (92) angeordnet ist.

16. Kommissioniereinrichtung nach einem der Ansprüche 10 bis 15, **dadurch gekennzeichnet, dass** der Greifer (14) auf die Teile (22) in vertikaler Richtung (V) zugreift und/oder, dass insbesondere der Greifer (14) die Teile (22) für das Ablegen in vertikaler Richtung (V) bewegt und/oder, dass insbesondere die Greifelemente (96) mit bewegbaren Klemmkörpern (116) versehen sind, welche von einer den Greifvorsprüngen (104) abgewandten Seite in Richtung auf die Greifvorsprünge (104) zu bewegbar sind.

17. Kommissioniereinrichtung nach einem der Ansprüche 10 bis 16, **dadurch gekennzeichnet, dass** die Greifvorsprünge (104) so angeordnet sind, dass diese das zu greifende Teil (22) in seinen unteren Außenbereichen (108) hintergreifen.

18. Kommissioniereinrichtung nach einem der Ansprüche 10 oder 17, **dadurch gekennzeichnet, dass** die Klemmkörper (116) so angeordnet sind, dass sie in der Lage sind, die Teile (22) in ihren Außenbereichen (124) zwischen den Klemmkörpern (116) und den Greifvorsprüngen (104) einzuklemmen, insbesondere dass die Klemmkörper (116) durch Klemmantriebe (118) antreibbar sind, insbesondere dass die Klemmantriebe (118) an den Greifelementen (96) angeordnet sind, insbesondere dass die Klemmkörper (116) an den Greifelementen (96) bewegbar geführt sind.
